# EUROPÄISCHE PATENTSCHRIFT

(11) **EP 2 135 693 B1**
(45) Veröffentlichungstag und Bekanntmachung des Hinweises auf die Patenterteilung: **21.05.2014**
(21) Anmeldenummer: 09161807.4
(22) Anmeldetag: 03.06.2009
(51) Int. Cl.: B22C 9/00, B01D 39/16

(54) **Filterelement und Verfahren zur Herstellung eines Filterelementes**
Filter element and method for manufacturing a filter element
Elément de filtre et procédé de fabrication d'un élément de filtre

(30) Priorität: 06.06.2008 DE 102008002877; 13.06.2008 DE 102008002889
(43) Veröffentlichungstag der Anmeldung: 23.12.2009
(73) Patentinhaber: Ambros Schmelzer & Sohn GmbH & Co. KG, 95679 Waldershof (DE)
(72) Erfinder: Schmelzer, Gerhard, 95679, Waldershof (DE); Bayer, Michael, 86672, Thierhaupten (DE)
(74) Vertreter: Pröll, Jürgen

(56) Entgegenhaltungen:
- EP-A- 0 743 085
- EP-A- 1 886 748
- WO-A-02/092881
- DE-A1- 4 208 195
- DE-A1- 10 203 745
- DE-C- 621 604
- GB-A- 737 111
- GB-A- 1 257 017
- GB-A- 1 278 224
- GB-A- 2 222 792

## Beschreibung

Die Erfindung betrifft ein Verfahren zur Herstellung eines Filterelementes aus Kunststoffgranulat, ein Filterelement und eine Form zur Herstellung eines Filterelements.

Aus EP-A-0 630 282 ist ein beschichtetes Filterelement für das Abscheiden von Feinstpartikeln aus Gasen oder Flüssigkeiten bekannt. Das Filterelement besteht aus einem eigensteifen porösen Grundkörper aus gesintertem Thermoplast und einer dem zu reinigenden Medium zugewandten, feinporigen, mit dem Grundkörper fest verbundenen Oberflächenschicht. Der Grundkörper besteht aus einem Gemisch aus niedermolekularen und ultrahochmolekularen Polyethylen. Die Oberflächenbeschichtung des Filterelementes besteht aus reinem ultrahochmolekularen Polyethylen.

Nachteilig bei diesem bekannten Filterelement ist, dass die Korngröße und der Schmelzbereich des handelsüblichen Beschichtungsmaterials zumeist nicht den Eigenschaften des Materials des Grundkörpers entsprechen.

DE-A1-198 22 089 ist ein weiteres beschichtetes Filterelement für das Abscheiden von Feinstparktikeln aus Gasen oder Flüssigkeiten bekannt. Es ist ein eigensteifer poröser Grundkörper vorhanden, der aus gesintertem Thermoplast hergestellt ist. Eine dem zu reinigenden Medien zugewandten, feinporige, mit dem Grundkörper fest verbundene Oberflächenschicht ist aufgebracht, wobei die Oberflächenschicht aus einem thermoplastischen Copolymer besteht und das Filterelement vorzugsweise als Rohr ausgebildet ist.

Nachteilig hierbei ist, dass das Herstellungsverfahren für ein solches Filterelement mehrere unterschiedliche Herstellungsschritte erfordert und das Filterelement nicht in einem einzigen Arbeitsgang herstellbar ist. Nachteilig bei einem derartigen Filterelement ist, dass die Trennschärfe des Filterelements abhängig ist von der Güte der aufgebrachten thermoplastischen Copolymerschicht.

Aus EP 0 743 085 B1 (DE 696 22 635 T2) sind ein poröser Plastikfilter und ein Verfahren zu dessen Herstellung offenbart. Der poröse Plastikfilter zum Trennen von feinen Teilchen ist hergestellt durch Sinterformen von Teilchen eines thermoplastischen Materials. Der Kontaktwinkel mindestens einer Oberfläche des porösen Plastikfilters beträgt gegenüber Wasser mindestens 60°, bevorzugt mindestens 90°. Es wird mindestens ein ultra hochmolekulargewichtiges Polyethylen mit einer mittleren Teilchengröße innerhalb eines Bereiches von 10 µm bis 60 µm verwendet, aus welchem der poröse Plastikfilter gebildet ist.

Aus JP 11347323 A ist ein Filter, hergestellt aus gesinterten Materialien, offenbart, wobei vor dem Sintervorgang die Hauptkomponente aus vorgepresstem Stoffmaterial hergestellt ist.

Aus US-A-2,297,248 und JP 08318116 A ist ein Filter, bestehend aus porösem Material, offenbart.

Aus DE 102 03 745 B4 ist ein Filter mit einer aus feinkörnigem thermoplastischem Material gesinterten Feinschicht bekannt, welche mit einer aus grobkörnigem thermoplastischen Material gesinterten Tragschicht verbunden ist, wobei die Feinschicht und die Tragschicht an Verbindungsstellen nur kleinflächig miteinander verbunden sind. Die Poren der Tragschicht an der Verbindungsseite zwischen Tragschicht und Feinschicht bleiben unausgefüllt.

Aus DE 30 24 324 A1 sind ein Filterkörper zum Abscheiden von Fest- und/oder Schwebstoffen sowie ein Verfahren zu dessen Herstellung offenbart. Der Filterkörper weist eine mit dem jeweiligen zu filtrierenden Medium angepasste Oberflächenbeschaffenheit einerseits und Porösität andererseits auf. Die Filterschichten eines jeden Filterkörpers sind untrennbar miteinander verbunden. Es ist aber ein von der äußeren Filterschicht zum Inneren des Filterkörpers abnehmender Strömungswiderstand vorhanden. Die innere Filterschicht bildet ein selbsttragendes Gerüst für die äußere Filterschicht.

Die Patentschrift GB 737 111 A gibt ein Verfahren für die Herstellung von porösen Körpern aus thermoplastischem Material an, insbesondere Körpern einer zylindrischen oder Kerzen-Form durch Sintern. Ein zweischichtiger Aufbau mittels zweier thermoplastischer Kunststoffe mit unterschiedlicher Körnung sowie der dadurch entstehende Porendurchmesser, ist jedoch nicht beschrieben.

Patentschrift EP 1 886 748 A beschreibt ein Verfahren zur Herstellung von Sinterprodukten. In diesem Verfahren wird eine Form mit einer Mischung gefüllt, die Partikel von Metallen und/oder Metalllegierungen und wärmeflüchtige Bindemittel aufweist. Durch das Sintern in der Form lassen sich mehrschichtig aufgebaute Erzeugnisse gewinnen. Über die Herstellung von Filtern mit einer bestimmten Porengröße ist in der Schrift jedoch nichts ausgesagt.

Die Patentschrift WO 02/092881 A, betrifft ein Verfahren zur Herstellung von zumindest teilweise beschichteten Körpern mit einer Beschichtung aus sinterfähigem Material. Dabei wird ein Trägerkörper unter Drehung aus einer Suspension gezogen, so dass sich auf dem Trägerkörper eine Schicht ausbildet, die in einem anschließenden Schritt gesintert wird. Dabei entstehen Körper mit einem Mittenrauhwert von 1,69 µm. Über das Herstellen von Filtern mit einer bestimmten Porengröße oder Trennschärfe durch das Sinterverfahren ist nichts ausgesagt.

Die Patentschrift DE 42 08 195 A1 gibt ein selbsttragendes, beschichtetes Filterelement zum Filtern von Stäuben oder Aerosolen aus der Umgebungsluft an. Dieses Filterelement besteht aus einem Tragkörper mit gesintertem Kunststoff, der eine weitere poröse Filterschicht umfasst, die ebenfalls aus einem gesinterten Kunststoff besteht. Die poröse Filterschicht umfasst eine Porengröße von 0 µm bis 12 µm, wohingegen der Tragkörper eine Porengröße von 12 bis 34 µm aufweist.

Die Patentschrift GB 1 278 224 betrifft das Gebiet eines Erzeugens von Gusskörpern mit richtungsmäßigem, orientiertem Kornwachstum unter Verwendung elektrostatischer Kühleffekte, um ein Temperaturdifferenzial in der Schmelze während eines Kühlens aufrecht zu erhalten. Dazu wird in eine Gussvorrichtung geschmolzenes Metall eingegossen. Darüber hinaus wird von außen ein elektrisches Feld über Elektroden angelegt, das zum Kühlen des geschmolzenen Materials verwendet wird. Eine zusätzliche Kühlung kann durch Einspeisen eines Kühlgases über Zuführungen erreicht werden. Darüber hinaus kann die Gießform vorgeheizt sein. Die zum Gießen von Metallen verwendete Gussform ist zum Sintern von Kunststoffmaterialien nicht eignet.

Die Patentschrift GB 1 257 017 betrifft ein Verfahren zum Zentrifugalgießen eines Reifens in eine Gießform unter Verwendung einer Vielzahl von Fasern. An die Gießvorrichtung kann eine elektrostatisches Potenzial angelegt werden, das dazu führt, dass sich die Fasern annähernd senkrecht zu der lokalen Oberfläche des Kerns ausrichten. Allerdings ist in der Patentschrift nicht offenbart, dass sich diese für ein Sintern von Materialien eignet.

Die Patentschrift DE 621 604 betrifft einen Metallkern zum Gießen von einteiligen Kokillen, insbesondere zum Herstellen von Kupferwalzplatten. Für eine Kühlung des Kerns ist eine inneres Kühlmittel vorgesehen, vorzugsweise durch Anordnung einer Kühlwasserschlagen im Kern. In der Patentschrift sind jedoch keine Hinweise enthalten, dass sich der zum Herstellen von Kupferwalzplatten geeignete Kern auch zum Sintern von Kunststoffen verwenden lässt.

Die Patentschrift GB 2 222 792 A betrifft ein Verfahren zum Gießen eines hohlen, metallischen Barrens. Dazu wird ein von innen gekühlter Kern innerhalb einer Gussform verwendet. Über ein Sintern von Kunststoffen ist in der Patentschrift nichts ausgesagt.

Aufgabe der vorliegenden Erfindung ist es, ein Verfahren aufzuzeigen, welches ein Filterelement in einem Arbeitsgang auf einfache Weise herstellbar macht, sowie ein entsprechendes Filterelement.

Diese Aufgabe wird anhand der Merkmale des Verfahrens nach Anspruch 1, sowie des weiteren unabhängigen Ansprüches gelöst.

Vorteilhafte Ausgestaltungen der Erfindung ergeben sich anhand der abhängigen Ansprüche, der weiteren Beschreibung, sowie aus der konkreten Beschreibung eines Ausführungsbeispiels anhand von Figuren in den Zeichnungen.

Das Verfahren zur Herstellung eines Filterelements aus Kunststoffgranulat nach Anspruch 1 umfasst folgende Schritte:
- eine Form mit einer von außen zugänglichen Öffnung wird an der Innenwandung elektrisch oder elektrostatisch aufgeladen;
- in die Öffnung der Form wird ein erstes Granulat mit einer bestimmten Körnung eingebracht, wobei das erste Granulat durch die elektrisch oder elektrostatisch aufge-ladene Innenwandung der Form in nahezu gleichmäßiger Stärke auf die Innenwandung der Form aufgebracht wird;
- in die Form wird nahezu mittig ein Kern eingeführt;
- der Hohlraum, der sich zwischen dem in die Form eingefügten Kern und der Innenwandung der Form bildet, wird mit einem zweitem Granulat mit einer von dem ersten Granulat abweichenden Korngröße ausgefüllt;
- ein Sinterprozess wird gestartet;
- nach einer Abkühlphase wird der Kern und das Filterelement, welches durch den Sinterprozess als Verbindung zwischen dem ersten Granulat und dem zweiten Granulat entstanden ist, entnommen.

Es hat sich als zweckdienlich erwiesen, die erste Granulatschicht nach dem Einbringen des Granulats zunächst vorzusintern, damit kein Abrieb beim Einbringen der zweiten Granulatschicht gegeben ist. Auf die Vorsinterung kann allerdings verzichtet werden, wenn die statische Ladung so groß ist, dass die Haftung ausreicht, um einen Abrieb einzelner Körner beim Einbringen der Kunststoffkörner des zweiten Granulats zu verhindern. Die erste Granulatschicht bildet praktisch die äußere Filterschicht und besteht in der Regel aus einem feinkörnigeren Granulat als das Granulat der zweiten Granulatschicht. Durch den doppelten Sinterprozess ist darüber hinaus eine verbesserte Porosität zwischen den Schichten gegeben.

Das Einbringen des ersten Granulats kann mittels einer Sprühlanze erfolgen, welche in die Form über deren Öffnung eingeführt wird. Hierdurch wird eine gleichmäßige Verteilung des ersten Granulats in der Form und insbesondere an der Innenwandung der Form erreicht.

Die Öffnung der Form kann dabei von einer Abdeckung verschlossen sein. Hierdurch wird vermieden, dass beim Einbringen des ersten Granulats dieses aus der Öffnung austreten kann und außerhalb der Form verteilt wird. Das erste Granulat mit einer ersten Körnung und die Körner werden durch elektrostatische oder elektrische Ladung an der Innenwandung der Form gehalten.

Die Form kann grundsätzlich einteilig oder mehrteilig ausgeführt sein. Sie kann als geschlossene Hohlform mit einseitiger Öffnung aus solchen Teilen zusammengesetzt sein. Sie kann auch als Teilsegmentform ausgeführt sein, so dass die daraus gefertigten Filterelemententeile zu Filterelementen zusammengesetzt werden können. Beispielsweise ist ein zylinder- oder rohrförmiges Filterelement aus zwei Teilen zusammenfügbar, die in Halbschalenformen gefertigt sind. Die Teile können auch so ausgebildet sein, dass daraus runde oder polygonale Filterelemente zusammensetzbar sind. Die Teile sind auch einzeln verwendbar und können beispielsweise zu einer Filterwand zusammengesetzt werden. Es sind beliebige Strukturen realisierbar.

Vorteilhaft ist es, den Kern so weit in die Form hinein zu schieben, dass dieser mit der Unterseite der Form formschlüssig abschließt. Hierdurch wird vermieden, dass sich zwischen dem Kern und der Unterseite der Form Granulat ansammelt. In der Unterseite der Form kann eine Vertiefung eingebracht sein, in welche der Kern einschiebbar ist. Hierdurch wird eine exakte und definierte Lage des Kerns in der Form erreicht.

Durch die abweichende Körnung der Granulate wird erreicht, dass das Filterelement, welches hergestellt wird, definiert einstellbare Eigenschaften, insbesondere Filtereigenschaft aufweist. Für das erste Granulat und das zweite Granulat werden feinpulverförmige Granulate verwendet, wobei das erste Granulat und das zweite Granulat aus dem gleichen sinterfähigen Kunststoff, z. B. aus Polyethylen, bestehen können. Es können aber auch unterschiedliche Kunststoffe, z. B. unterschiedliche thermoplastische Kunststoffe verwendet werden, sofern die Granulate sinterfähig sind. Die Auswahl erfolgt nach dem Einsatz eines solchen Filters. Es können aber auch Filter aus Duroplasten in gleicher Weise hergestellt werden. Hierdurch wird zum einen ein Sinterprozess ermöglicht und zum andern wird eine einfache Handhabbarkeit des zu verwendenden Materials erreicht, so dass eine maschinelle Serienfertigung erreicht werden kann. Das erste Granulat kann ein Granulat mit einer kleineren Körnung als das zweite Granulat sein.

Vorteilhaft ist es, dass das erste Granulat und das zweite Granulat während des Sinterprozesses bei einer vordefinierten Temperatur zu einem porösen aber stabilen Körper, der das Filterelement bildet, sintern.

Das Sintern erfolgt bei einer dem verwendeten Material entsprechenden Temperatur. Der Temperaturbereich liegt bei üblichen Kunststoffen zwischen ca. 120°C und 240°C, bei Polyethylen vorzugsweise bei ca. 160°C.

Im Patentanspruch 7 ist ein Filterelement angegeben, das nach einem der vorangehenden Verfahrensansprüche hergestellt ist und zum Abscheiden von Feinstpartikeln aus Gasen oder Flüssigkeiten dient. Es besteht aus einem eigensteifen Körper aus thermoplastischem Kunststoff, wobei die einem zu filtrierenden Medium zugewandte Seite feinporiger ist als die dem zu filtrierenden Medium abgewandte Seite des Filterelementes, wobei die unterschiedliche Porigkeit des Filterelementes durch einen Sintervorgang von zwei thermoplastischen Kunststoffen mit unterschiedlicher Körnung erzeugt wird.

Vorteilhaft ist es, wenn das Filterelement auf der der zu filternden Medium abgewandte Seite eine Trennschärfe von ca. 60 µm und auf der der dem zu filternden Medium zugewandten Seite eine Trennschärfe von ca. 40 µm aufweist.

Andere Korngrößen sind ebenfalls verwendbar, dies hängt vom jeweiligen Einsatz ab.

Das Filterelement kann rohrförmig, zylinderförmig, stabförmig ausgebildet sein oder ein Rundrohr, ein Sechskantrohr oder ein Achtkantrohr oder ein Rohr mit frei definiertem Querschnitt sein.

Vorteilhaft ist es, wenn die dem zu filternden Medium zugewandte Seite dünner ist als die dem zu filternden Medium abgewandte Seite und die dem zu filternden Medium abgewandte Seite das Stützgerüst für das Filterelement und die dem Medium zugewandte Seite den Filter und/oder die Filterschicht bildet.

Eine Form zur Herstellung eines Filterelementes nach einem oder mehreren der vorangehenden Verfahrensansprüche weist eine Öffnung, Innenwandungen, welche mittels einer an die Innenwandungen anlegbaren elektrischen Spannung elektrisch aufladbar sind, eine Heizeinheit, mittels welcher die Form auf eine einstellbare Sintertemperatur bringbar ist, und/oder eine Kühleinheit, mittels welcher die Form schnell auf Umgebungstemperatur abkühlbar ist, auf.

Die Form kann beliebige Querschnittsformen aufweisen, einteilig oder mehrteilig aus Segmenten zusammengesetzt sein. Auch kann im Boden der Form eine Vertiefung eingebracht sein.

Auch kann an der Öffnung der Form eine Verdickung angebracht sein, die den Kern umschließt, so dass der Kern in definierter Lage in der Form einfügbar ist.

Ein Kern dient zur Verwendung im Verfahren nach einem oder mehreren der vorhergehenden Verfahrensansprüche und dient zum Einführen in eine Form.

Der Kern weist Hohlräume auf, in welche ein Medium einbringbar und ausbringbar ist, mittels dessen der Kern erhitzbar und/oder abkühlbar ist.

Grundmaterial für die Herstellung des Filterelementes ist ein thermoplastischer Kunststoff. Es kommt vorzugsweise Polyethylen zum Einsatz. Das Polyethylen liegt vorzugsweise in Granulatform oder als feinkörniges Pulver vor. In einer besonders vorteilhaften Ausgestaltung der Erfindung kommt ein Granulat bzw. Pulver mit einer maximalen Körnung bzw. Korngröße von 60 µm und/oder 40 µm zum Einsatz. Hierdurch wird dann bei der Herstellung des Filterelements eine Trennschärfe des Filters von 60 µm bzw. 40 µm erreicht. Vorteilhaft bei der Erfindung ist, dass das Filterelement aus einem einzigen Kunststoff hergestellt wird. Sowohl die Außenseite des Filterelementes als auch die innenliegende Seite des Filterelementes und der gesamte Körper des Filterelementes bestehen aus dem gleichen Material, nämlich aus thermoplastischem Kunststoff, vorzugsweise Polyethylen. Das Polyethylen liegt in Pulverform oder Granulatform vor. Durch die Verwendung von Granulat mit einer geringeren Körnung für die außenliegende Seite des Filterelementes, d.h. der dem zu reinigendem Medium, zugewandte Seite, vorliegend in flüssiger oder gasförmiger Form, und die Verwendung von Granulat mit größerer Körnung für die innenliegende Seite des Filterelementes, d.h. der dem zu reinigendem Medium abgewandten Seite, und zur Erzeugung des Körpers des Filterelementes, kann ein erfindungsgemäßes Filterelement mit dem erfindungsgemäßen Verfahren hergestellt werden. Es wird ein Filterelement aus einem thermoplastischen Kunststoff, vorzugsweise Polyethylen erzeugt, welches jede beliebige Trennschärfe eines Filterelementes realisieren lässt, alleinig durch die Auswahl der Korngröße des Granulats bzw. Pulvers, aus dem das Filterelement hergestellt wird.

Wichtig bei der Herstellung ist, dass sich Außen- und Innenschicht des Filterelementes immer in der variablen Trennschärfe unterscheiden und somit die Filterqualität steuerbar wird, d.h. zur Herstellung des Filterelementes werden zwei Kunststoffgranulate verwendet, die sich in der Korngröße unterscheiden.

Zur Herstellung des Filterelementes ist eine Form vorhanden. Diese Form ist vorzugsweise als Hohlkörper ausgeführt. Die Form, insbesondere die Innenwandung der Form, wird elektrisch aufgeladen, d. h., die Innenwandungen der Form werden elektrisch geladen. In die elektrisch geladene Form wird der erste Kunststoff, vorzugsweise thermoplastischer Kunststoff in Granulat- oder Pulverform eingebracht. Das erste Granulat bzw. Pulver weist eine Körnung erster Größe auf. Durch die elektrische bzw. elektrostatische Aufladung der Form, insbesondere der Innenwandung der Form, werden die Körner des ersten Granulats bzw. Pulvers von der Innenwandung bzw. den Innenwandungen der Form angezogen und dort gehalten.

Wie beschrieben kommt vorzugsweise Granulat aus thermoplastischem Kunststoff zum Einsatz. Das Granulat bzw. Pulver wird in einer vorteilhaften Ausgestaltung der Erfindung, um eine besonders gleichmäßige Verteilung auf der Innenwandung der Form zu erreichen, mit einer Sprühlanze eingeführt. Hierzu wird die Sprühlanze in die Form eingebracht und das erste Granulat bzw. Pulver wird mit einer definierten Durchflussmenge in die Sprühlanze eingebracht und mittels dieser in die Form gesprüht. Die Sprühlanze wird hierzu in die Form bis nahezu zum Boden der Form eingeschoben und dann mit einer kontinuierlich gleichbleibenden Geschwindigkeit aus der Form herausgezogen, während zugleich die Einbringung des ersten Granulats bzw. Pulvers erfolgt. Somit ergibt sich, in Abhängigkeit von der Einbringmenge des Granulats bzw. Pulvers, sowie der Ausziehgeschwindigkeit der Sprühlanze, eine definierte Dicke von einer auf die Innenwandung der Form aufgebrachten ersten Granulat- bzw. Pulverschicht.

Nachdem die gewünschte Menge ersten Granulats auf der Innenwandung der Form aufgebracht ist, wird in die Form ein Kern eingeführt. In einer bevorzugten Ausführung ist der Kern von gleicher Formgebung wie der Hohlraum, den die Form bildet. Dies bedeutet, wenn die Form einen Zylinder bildet, ist der Kern ebenfalls zylindrisch.
Der Kern wird mittig in die Form eingebracht und schließt die Form im unteren Bereich ab. Im oberen Bereich der Form verbleibt eine Öffnung. Zwischen der Innenwandung der Form, dem eingebrachten ersten Granulat bzw. Pulver, das an der Innenwandung der Form durch die elektrische/elektrostatische Aufladung der Form gehalten wird, und dem Kern verbleibt ein Hohlraum. Dieser Hohlraum wird mit einem zweiten Granulat bzw. Pulver mit größerer Korngröße bzw. gröberer Körnung als das erste Granulat bzw. Pulver aufgefüllt bzw. ausgefüllt. Beim zweiten Granulat bzw. Pulver handelt es sich um einen Kunststoff, der bis auf eine größere/gröbere Körnung mit dem ersten Granulat bzw. Pulver gleich ist; es handelt sich um einen thermoplastischen Kunststoff. Nachdem der Hohlraum mit dem zweiten Granulat bzw. Pulver gefüllt ist, wird ein thermischer Sinterprozess gestartet. Hierzu wird die Form und/oder der Kern auf eine vorgegebene Temperatur erhitzt. Dies erfolgt, indem in/an der Form ein Heizelement angeordnet ist, das bei Bedarf die Form erhitzt. Auch im Kern kann ein Heizelement angeordnet sein.

Bei Erreichen der vorgegebenen Temperatur startet der thermische Prozess des Sinterns, bei welchem die Körner der zwei Granulate bzw. Pulver zu einem in sich stabilen, porösen Filterelement sintern. Hierdurch entsteht das Filterelement nach der Erfindung, welches die Form des Kerns aufweist, wobei das Filterelement eine äußere Filterschicht, gebildet aus dem ersten Granulat bzw. Pulver, und eine zweite Schicht aufweist, bestehend aus dem zweiten Granulat bzw. Pulver, und die äußere Filterschicht eine höhere Trennschärfe aufweist als die zweite Schicht.

Die zweite Schicht stellt das Gerüst bzw. die Stützform für das Filterelement dar. Die erste Schicht, gebildet aus dem ersten Granulat bzw. Pulver, bildet die Filterschicht. Das Filterelement weist damit einen porösen Grundkörper auf, der vorrangig aus dem zweiten Granulat bzw. Pulver gebildet ist. Es hat sich durch das erste Granulat eine Filterschicht als Außenseite gebildet, welche eine höhere Trennschärfe als der Grundkörper aufweist. Das hierbei entstandene Filterelement ist formstabil und dennoch porös. In Abhängigkeit der Formgebung der Form und des Kerns kann in nahezu beliebiger Weise die Form eines Filterelementes hergestellt werden. In Abhängigkeit der beiden zu verwendenden Granulate bzw. Pulver kann die Trennschärfe des Filterelementes ausgewählt und angepasst werden. Im Weiteren ist durch die Formgebung der Form sowie des Kerns, welcher in die Form eingebracht wird, jede denkbare Form eines Filterelementes erzeugbar. Es sind somit beliebige Geometrien herstellbar.

Wesentlich für die Erfindung ist es ferner, dass die einem zu filternden Medium zugewandte Seite des Filterelements eine dünne Filterschicht haben muss, welche zuerst erzeugt wird und anschließend das gröbere Stützgerüst durch das zweite Granulat bzw. Pulver im Sinterprozess ausgebildet wird. Durch das Sintern verbinden sich beide Granulate bzw. Pulver in der gewünschten Art und Weise. Die Filterschicht wird fest und untrennbar mit dem porösen Grundkörper verbunden.

Das hierbei entstehende Filterelement weist eine vordefinierte geometrische Form auf, in vorzugsweiser Ausführung eine Rohrform. Das Filterelement weist eine äußere Filterschicht sowie einen darunter befindlichen porösen Grundkörper auf, der eine höhere Durchlässigkeit aufweist als die Filterschicht, gebildet aus dem ersten Granulat bzw. Pulver. Somit ist es möglich, dass das zu reinigende Medium die Schmutzstoffe am äußeren Rand der Filterschicht abscheidet. Diese Schmutzpartikel scheiden sich an der Filterschicht ab und bilden einen Filterkuchen. Der Filterkuchen kann durch bekannte Vorgehensweisen, wie Rückstoß durch Presslufteingabe in den Filter oder Rütteleffekte vom Filterelement gelöst werden.

Im Weiteren wird die vorliegende Erfindung anhand eines konkreten Ausführungsbeispieles anhand von Figuren beschrieben. Dieses konkrete Ausführungsbeispiel stellt keine Limitierung der Erfindung auf dieses Ausführungsbeispiel dar.

Es zeigen:
- Fig. 1: einen schematischen Schnitt durch eine verwendbare Form,
- Fig. 2: einen Schnitt durch die Form mit eingebrachter Sprühlanze während dem Einbringen des ersten Granulats,
- Fig. 3: einen Schnitt durch die Form mit eingebrachten Kern,
- Fig. 4: einen Schnitt durch eine weitere Form mit eingebrachten Kern, und
- Fig. 5: einen Schnitt durch ein erfindungsgemäßes Filterelement.

Zur besseren Verständlichkeit der Erfindung werden gleiche Elemente in den Figuren mit gleichen Bezugszeichen versehen. Dies dient der Übersichtlichkeit der Erfindung und der weiteren Beschreibung. In den einzelnen Figuren werden aber zumeist nur die Bezugszeichen verwendet, welche für die entsprechende Figurenbeschreibung und die Darstellung der Erfindung wesentlich sind.

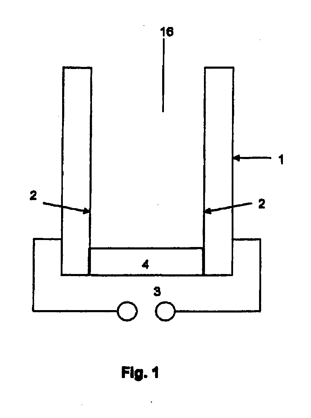

Fig. 1 zeigt einen Schnitt durch eine Form. Die Form dient zur Herstellung eines erfindungsgemäßen Filterelementes.

Die Form 1 ist weist innenseitig einen Hohlraum auf. In der vorliegenden Ausführung nach Fig. 1 ist dieser Hohlraum in Form eines Zylinders ausgebildet. Es kann aber jede andere Form gewählt werden, die Erfindung ist hierauf nicht limitiert.

Die Form 1 weist innen eine Seitenwandung bzw. Seitenwandungen 2 und eine Unterseite 4 auf. Die Seitenwandungen 2 sind mittels einer elektrischen Spannungsversorgung 3 elektrostatisch/elektrisch aufladbar. Die Spannungsversorgung 3 ist eine Gleichspannungsquelle.

Die Form 1 besteht vorzugsweise aus Metall. Die Seitenwandungen 2 sind insbesondere auf der dem Hohlraum der Form 1 zugewandten Seite aus einem elektrisch leitenden bzw. magnetisierbaren Material hergestellt. Die Unterseite 4 der Form 1 ist entweder mit den Seitenwandungen 2 verbunden oder elektrisch von diesen getrennt. Ist die Unterseite 4 mit den Seitenwandungen 2 verbunden, so wird auch diese elektrostatisch aufgeladen und, wie später beschrieben, das einzubringende Granulat schlägt sich auch auf dieser Unterseite 4 nieder. Auf diese Weise können Filterelemente erzeugt werden, welche nur eine Öffnung aufweisen. Ist die Unterseite 4 der Form 1 nicht elektrisch mit den Seitenwandungen 2 verbunden, so ist die Unterseite 4 potentialfrei. In die Form 1 eingebrachtes Granulat wird von den elektrisch/elektrostatisch aufgeladenen Seitenwandungen 2 angezogen und die Unterseite 4 bleibt weitgehend granulatfrei.

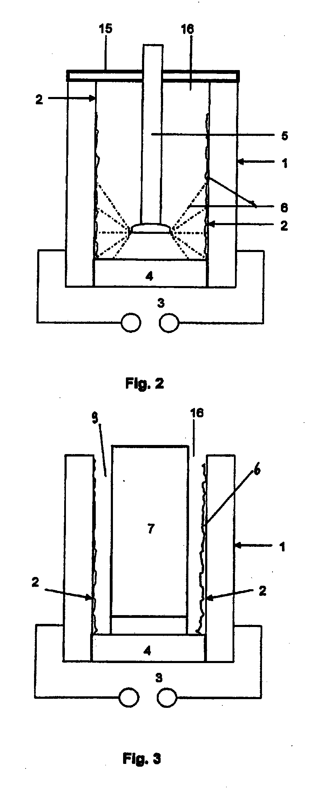

In Fig. 2 ist ebenfalls ein Schnitt durch die Form 1 dargestellt. In Fig. 2 ist dargestellt, wie ein erstes Granulat 6 in die Form 1 eingebracht wird. Vorzugsweise erfolgt das Einbringen des ersten Granulats 6 über eine Sprühlanze 5. Beim ersten Granulat 6 handelt es sich um ein Granulat mit geringer Körnung, nahezu in Pulverform. Das erste Granulat 6 weist eine vordefinierte erste Körnung auf. Dies bedeutet, dass das erste Granulat 6 eine Korngröße definierter Art hat. Das erste Granulat 6 wird über die Sprühlanze 5 in die Form 1 eingebracht. Die Körner des ersten Granulats 6 werden durch die elektrostatisch aufgeladenen Seitenwandungen 2 angezogen und lagern sich dort gleichmäßig an.

Die Sprühlanze 5 wird in Abhängigkeit der Menge des einzubringenden ersten Granulats 6 aus der Form 1 mit einer entsprechenden Zuggeschwindigkeit herausgezogen. Durch die Steuerung der Auszugsgeschwindigkeit der Sprühlanze 5 und der Einführmenge des ersten Granulats 6 bildet sich an den Seitenwandungen 2 eine Schicht vom ersten Granulat 6 an. Diese Schichtdicke kann gesteuert werden. Diese Schicht bildet später die Filterschicht des Filterelementes.

Ist die Sprühlanze 5 herausgezogen, befindet sich auf den Seitenwandungen 2 der Form 1 eine vordefinierte Stärke ersten Granulats 6.

In Fig. 3 ist ein weiterer Schnitt durch die Form 1 dargestellt; hier ist der nächste Verfahrensschritt dargestellt. An den Seitenwandungen 2 der Form 1 hat sich das erste Granulat 6 in einer definierten Schichtdicke angelagert. In die Form 1 wird nunmehr nahezu mittig ein Kern 7 eingeführt. Der Kern 7 berührt in einer vorzugsweisen Ausführung der Erfindung die Unterseite 4 der Form 1 und schließt mit dieser form- und kraftschlüssig ab. Durch diese vorteilhafte Ausführung kann das Filterelement, welches erzeugt wird, z.B. als Hohlrohrelement, welches auf zwei Seiten eine Öffnung aufweist, ausgeführt werden. In einer weiteren Ausgestaltung der Erfindung wird der Kern 7 in die Form 1 soweit eingefahren, dass die Schichtdicke des ersten Granulats 6, welches sich an den Seitenwandungen 2 und an der Unterseite 4 der Form angesammelt hat, entsprechend verdickt ist und zusätzlich ein Zwischenraum zwischen dem ersten Granulat 6 und dem Kern 7 vorhanden ist.

Zwischen dem Kern 7 und den Seitenwandungen 2 und/oder der Unterseite 4 mit dem aufgebrachten ersten Granulat 6 verbleibt ein Hohlraum 9.

In der Ausführungsform der Erfindung, in welcher der Kern 7 formschlüssig mir der Unterseite 4 abschließt, bildet sich nur ein Hohlraum 9 zwischen dem Kern 7 und den Seitenwandungen 2 mit dem darauf befindlichen ersten Granulat 6.

Dieser Hohlraum 9 wird nunmehr mit einem zweiten Granulat 8 befüllt. Dieses zweite Granulat 8 weist eine größere Körnung als das erste Granulat 6 auf. Somit kann eine unterschiedliche Trennschärfe des Filterelementes erzeugt werden. In einer vorzugsweisen Ausführungsform der Erfindung weist das erste Granulat 6 eine Körnung auf, welche zu einer Trennschärfe des Filterelementes von 40µm führt, und das zweite Granulat 8 eine Körnung auf, welche beim Filterelement zu einer Trennschärfe von 60µm führt.

Ist nunmehr das zweite Granulat 8 in den Hohlraum 9 gefüllt, so wird ein thermischer Sinterprozess gestartet. Hierzu wird vorzugsweise die Form 1 und/oder der Kern 7 auf eine vordefinierte Temperatur erhitzt, vorzugsweise 160° C. Die Temperatur für den Sinterprozess ist abhängig von der Auswahl des ersten und des zweiten Granulats 6 und 8. Nach einer vordefinierten Zeitdauer ist der Sinterprozess beendet. Der Kern 7 wird aus der Form 1 entnommen. In der Form 1 hat sich ein poröser Grundkörper des Filterelementes mit einer Filterschicht, bestehend aus dem ersten und zweiten Granulat 6 und 8, gebildet. Die Filterschicht des Filterelementes wird von dem ersten Granulat 6 gebildet. Das zweite Granulat 8 bildet den Grundkörper aus. Dieses Filterelement wird der Form 1 entnommen.

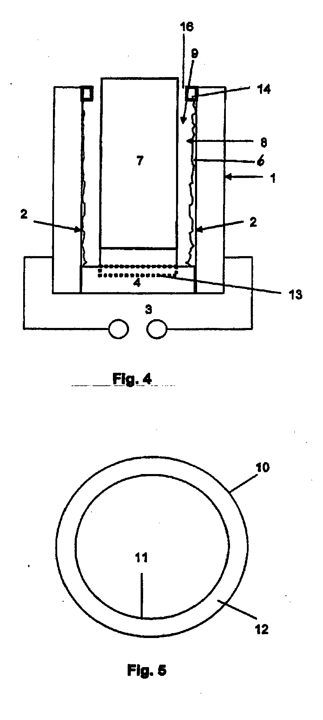

In Fig. 5 ist das Filterelement 10 im Schnitt dargestellt. Das Filterelement 10 weist einen porösen Grundkörper auf, der aus einem Sintervorgang des ersten und zweiten Granulats entstanden ist. An der Außenseite 12 des Filterelementes 10 hat sich eine Filterschicht gebildet, welche eine höhere Trennschärfe aufweist als der Restkörper des Filterelements 10. Die Filterschicht hat sich aus dem ersten Granulat gebildet. Im Übergangsbereich des ersten Granulats zum zweiten Granulat hat sich das erste Granulat mit dem zweiten Granulat verbunden, so dass die Filterschicht quasi untrennbarer Bestandteil des Filterelementes 10 ist. Das zweite Granulat hat einen porösen Grundkörper in vorgegebener Stärke ausgebildet, der das Stützgerüst für das Filterelement 10 darstellt.

Durch die Korngrößenauswahl der Granulate ist der Filterelementkörper porös aber stabil. Das Filterelement 10 kann nunmehr verwendet werden. Das Filterelement 10 kann in jeder geometrischen Form hergestellt werden. Die Formgebung wird bestimmt durch die Form der Form sowie die Form des Kerns.

Soll das Filterelement eine Filterschicht auf der Innenseite aufweisen, folglich in umgekehrter Art zum vorherigen Ausführungsbeispiel, so muss lediglich das Verfahren insoweit geändert werden, dass das Einbringen der Granulate in die Form getauscht wird.

Als vorteilhaft hat sich gezeigt, einen Filter mit einer Trennschärfe für die dem zu reinigenden Medium zugewandten Seite von 40µm und für die dem zu reinigenden Medium abgewandten Seite von 60µm zu wählen.

In Fig. 4 ist ein Schnitt durch eine weitere Form 1 dargestellt. Hier ist in vorteilhafter Weise eine Vertiefung 13 in die Unterseite 4 der Form 1 eingebracht. In diese Vertiefung 13 kommt der Kern 7 im eingeschobenen Zustand in die Form 1 zu liegen. Der Kern 7 schließt dann formschlüssig, bevor das zweite Granulat 8 in den Hohlraum 9 eingefüllt wird, mit der Form 1 im Bereich der Unterseite 4 ab.

An der Oberseite der Form befindet sich eine Verdickung 14. Diese dient zur besseren Einführung des Kerns 7 in die Öffnung 16 der Form 1. Die Verdickung 14 schützt das erste Granulat 6, welches an den Innenwandungen 2 anliegt davor, beim Einbringen des Kerns 7 abgeschabt zu werden.

Außerdem kann die Verdickung 14 dazu dienen, um als Maß für die Menge des eingebrachten ersten Granulats 6 zu bestimmen. Bis zur Verdickung 14 soll die Schicht aus erstem Granulat 6 aufgebracht werden.

Es hat sich als besonders vorteilhaft erwiesen, zur Herstellung des Filterelementes Polyethylen-Granulat zu verwenden.

### Bezugszeichen

- 1: Form
- 2: Seitenwandung(en)
- 3: Elektrische Spannung
- 4: Unterseite
- 5: Sprühlanze
- 6: erstes Granulat
- 7: Kern
- 8: zweites Granulat
- 9: Hohlraum
- 10: Filterelement
- 11: zum filternden Medium abgewandte Seite des Filterelementes
- 12: zum filternden Medium zugewandte Seite des Filterelement
- 13: Vertiefung
- 14: Verdickung
- 15: Abdeckung
- 16: Öffnung

## Patentansprüche

1. Verfahren zur Herstellung eines Filterelements aus Kunststoffgranulat mit folgenden Schritten:
- eine Form (1) mit einer von außen zugänglichen Öffnung (16) wird an der Innenwandung (2) elektrisch oder elektrostatisch aufgeladen;
- in die Öffnung (16) der Form (1) wird ein erstes Granulat (6) mit einer bestimmten Körnung eingebracht, wobei das erste Granulat (6) durch die elektrisch oder elektrostatisch aufgeladene Innenwandung (2) der Form (1) in nahezu gleichmäßiger Stärke auf die Innenwandung (2) der Form (1) aufgebracht wird;
- in die Form (1) wird nahezu mittig ein Kern (7) eingeführt;
- der Hohlraum, der sich zwischen dem in die Form (1) eingefügten Kern (7) und der Innenwandung (2) der Form (1) bildet, wird mit einem zweitem Granulat (9) mit einer von dem ersten Granulat abweichenden Korngröße ausgefüllt;
- ein Sinterprozess wird gestartet;
- nach einer Abkühlphase werden der Kern (7) und das Filterelement, welches durch den Sinterprozess als Verbindung zwischen dem ersten Granulat (6) und dem zweiten Granulat (8) entstanden ist, entnommen.

2. Verfahren nach Anspruch 1,
**dadurch gekennzeichnet, dass**
die Schicht aus dem ersten Granulat (6) vor dem Einbringen des Kerns und dem zweiten Granulat vorgesintert wird.

3. Verfahren nach Anspruch 1,
**dadurch gekennzeichnet, dass**
das Einbringen des ersten Granulats (6) mittels einer Sprühlanze (5) erfolgt, welche in die Form (1) über deren Öffnung (16) eingeführt wird, welche Öffnung (16) während der Einbringung des Granulats offen ist oder von einer Abdeckung (15) verschlossen wird.

4. Verfahren nach Anspruch 1,
**dadurch gekennzeichnet, dass**
die Form (1) eine einteilige oder mehrteilige längliche Hohlform oder eine Halbschalenform mit zylindrischer oder teilzylindrischer Struktur ist, wobei die Querschnittsformen rund, kreissegmentförmig, halbschalenförmig oder polygonal ausgeführt sind oder eine Freiform aufweisen und das Filterelement (10) bei Fertigung von Einzelteilen aus diesen nach dem Sintern zusammengesetzt wird.

5. Verfahren nach einem oder mehreren der vorangehenden Ansprüche 1 oder 2,
**dadurch gekennzeichnet, dass**
der Kern (7) soweit in die Form (1) eingeschoben wird, dass dieser mit der Unterseite (4) der Form (1) formschlüssig abschließt oder in eine Vertiefung (13) in der Unterseite (4) der Form (1) eingreift.

6. Verfahren nach einem oder mehreren der vorangehenden Ansprüche 1 bis 5,
**dadurch gekennzeichnet, dass**
das Sintern bei einer Temperatur erfolgt, die von dem verwendeten Kunststoffgranulat abhängig ist, vorzugsweise im Bereich zwischen 120°C und 240°C.

7. Filterelement (10) zum Abscheiden von Feinstpartikeln aus Gasen oder Flüssigkeiten, hergestellt nach einem der vorangehenden Verfahrensansprüche 1 bis 6, bestehend aus einem eigensteifen Körper aus thermoplastischem Kunststoff,
wobei die einem zu filternden Medium zugewandte Seite (12) feinporiger ist als die dem zu filternden Medium abgewandte Seite (11) des Filterelementes (10), wobei die unterschiedliche Porigkeit des Filterelements (10) durch mindestens einen Sintervorgang von zwei thermoplastischen Kunststoffen mit unterschiedlicher Körnung erzeugbar ist und das Filterelement (10) auf der dem zu filternden Medium abgewandten Seite (11) eine Trennschärfe von ca. 60 µm und auf der dem zu filternden Medium zugewandten Seite (12) eine Trennschärfe von ca. 40 µm aufweist.

8. Filterelement (10) nach Anspruch 7,
**dadurch gekennzeichnet, dass**
das Filterelement (10) rohrförmig, zylinderförmig oder stabförmig ist oder das Filterelement (10) ein Rundrohr oder ein Sechskantrohr oder ein Achtkantrohr oder ein Rohr mit frei definierten Querschnittsrohr bildet.

9. Filterelement (10) nach Anspruch 8 oder 9,
**dadurch gekennzeichnet, dass**
die dem zu filternden Medium zugewandte Seite (12) dünner ist als die dem zu filternden Medium abgewandte Seite (11) und die dem zu filternden Medium abgewandte Seite (11) das Stützgerüst für das Filterelement (10) und die dem Medium zugewandte Seite (12) den Filter und/oder die Filterschicht bildet.

## Claims

1. Method for producing a filter element from plastics material granulate, comprising the following steps:
- electrically or electrostatically charging a mould (1), which has an externally accessible opening (16), at the inner wall (2);
- a first granulate (6) of a defined grain size is introduced into the opening (16) of the mould (1), wherein the first granulate (6) is coated by the electrically or electrostatically charged inner wall (2) of the mould (1) on the inner wall (2) of the mould (1) in almost uniform thickness;
- a core (7) is introduced approximately centrally into the mould (1);
- the cavity formed between the core (7) introduced into the mould (1) and the inner wall (2) of the mould (1) is filled with a second granulate (9) of a grain size differing from the first granulate;
- a sintering process is started; and
- after a cooling phase the core (7) and the filter element which has arisen through the sintering process as a connection between the first granulate (6) and the second granulate (8) are removed.

2. Method according to claim 1, **characterised in that** the layer of the first granulate (6) is pre-sintered before introduction of the core and the second granulate.

3. Method according to claim 1, **characterised in that** the introduction of the first granulate (6) is carried out by means of a spray lance (5), which is introduced into the mould (1) by way of the opening (16) thereof, which opening (16) is open during introduction of the granulate or is closed by a cover (15).

4. Method according to claim 1, **characterised in that** the mould (1) is a single-part or multi-part elongate hollow mould or a shell mould with a cylindrical or part-cylindrical structure, wherein the cross-sectional shapes are formed to be round, segment-shaped, shell-shaped or polygonal or have a free shape and the filter element (10) when produced from individual parts is composed of these after the sintering.

5. Method according to one or more of the preceding claims 1 and 2, **characterised in that** the core (7) is pushed into the mould (1) to such an extent that this is flush in shape-locking manner with the underside (4) of the mould (1) or engages in a depression (13) in the underside (4) of the mould (1).

6. Method according to one or more of the preceding claims 1 to 5, **characterised in that** the sintering is carried out at a temperature which is dependent on the plastics material granulate used, preferably in the range between 120° C and 240° C.

7. Filter element (10) for separation of superfine particles from gases or liquids, the element being produced according to any one of the preceding method claims 1 to 6 and consisting of an inherently stiff body of thermoplastic plastics material, wherein the side (12) facing a medium to be filtered is more finely porous than that side (11), which is remote from the medium to be filtered, of the filter element (10), and wherein the different porosities of the filter element (10) can be produced by at least one sintering process of two thermoplastic plastics material of different grain size and the filter element (10) has a selectivity of approximately 60 microns on the side (11) remote from the medium to be filtered and a selectivity of approximately 40 microns on the side (12) facing the medium to be filtered.

8. Filter element (10) according to claim 7, **characterised in that** the filter element (10) is tubular, cylindrical or rod-shaped or the filter element (10) forms a round tube or a hexagonal tube or an octagonal tube or a tube with freely defined tube cross-section.

9. Filter element (10) according to claim 8 or 9, **characterised in that** the side (12) facing the medium to be filtered is thinner that the side (11) remote from the medium to be filtered and the side (11) remote from the medium to be filtered forms the support structure for the filter element (10) and the side (12) facing the medium forms the filter and/or the filter layer.

## Revendications

1. Procédé de fabrication d'un élément de filtre à partir de granulat de plastique avec les étapes suivantes
- un moule (1) avec une ouverture accessible de l'extérieur (16) est chargé électriquement ou électrostatiquement sur la paroi intérieure (2) ;
- dans l'ouverture (16) du moule (1), on place un premier granulat (6) avec un taille de grain particulière, le premier granulat (6) étant placé en raison de la paroi intérieur (2) du moule (1) chargée électriquement ou électrostatiquement à une épaisseur presque régulière sur la paroi intérieur (2) du moule (1) ;
- dans le moule (1), un noyau (7) est introduit presque au milieu ;
- l'espace creux qui se forme entre le noyau (7) introduit dans le moule (1) et la paroi intérieur (2) du moule (1) est rempli avec un second granulat (9) avec une taille de grain différente de celle du premier granulat ;
- un processus de frittage est lancé ;
- après une phase de refroidissement, le noyau (7) et l'élément de filtre, qui a été généré par le processus de frittage en tant que liaison entre le premier granulat (6) et le second granulat (8), est retiré.

2. Procédé selon la revendication 1
**caractérisé en ce que**
la couche selon le premier granulat (6) est préfrittée avant la mise en place du noyau et du second granulat.

3. Procédé selon la revendication 1
**caractérisé en ce que**
l'insertion du premier granulat (6) est réalisée à l'aide d'une lance de pulvérisation (5) qui est introduite dans le moule (1).
au-dessus de son ouverture (16), cette ouverture (16) étant ouverte pendant l'insertion du granulat ou étant fermée par un cache (15).

4. Procédé selon la revendication 1,
**caractérisé en ce que**
le moule (1) est un moule creux longitudinal à une ou plusieurs pièces ou un moule en demi-coque avec une structure cylindrique ou partiellement cylindrique, les coupes étant exécutées sous forme ronde, de segments de cercle, de demi-coque ou de polygone, ou présentant une forme libre, et l'élément de filtre (10) étant, lors de la fabrication de pièces individuelles, assemblé à partir de celles-ci après le frittage.

5. Procédé selon l'une ou plusieurs des revendications précédentes 1 ou 2,
**caractérisé en ce que**
le noyau (7) est inséré dans le moule (1) jusqu'à ce qu'il forme une surface continue avec le côté inférieur (4) du moule (1) ou qu'il s'enclenche dans un renfoncement (13) du côté inférieur (4) du moule (1).

6. Procédé selon l'une ou plusieurs des revendications précédentes 1 à 5
**caractérisé en ce que**
le frittage a lieu à une température qui dépend du granulat de plastique utilisé, de préférence dans une plage située entre 120°C et 240°C.

7. Élément de filtre (10) pour séparer les particules fines des gaz ou des liquides fabriqués selon l'une des revendications précédentes 1 à 6, composé d'un corps intrinsèquement rigide en thermoplastique,
le côté orienté sur un fluide à filtré (12) étant à pores plus fins que le côté opposé au fluide à filtrer (11) de l'élément de filtre (10), la différence de tailles de pores de l'élément de filtre (10) pouvant être générée par au moins un processus de frittage de deux thermoplastiques avec différentes tailles de grain, et l'élément de filtre (10) présentant sur le côté opposé au fluide à filtrer (11) une précision de séparation d'env. 60 µm et sur le côté tourné vers le fluide à filtrer (12) une puissance de précision d'environ 40 µm.

8. Élément de filtre (10) selon la revendication 7
**caractérisé en ce que**
l'élément de filtre (10) est en forme de tube, de cylindre ou de baguette, ou l'élément de filtre (10) formant un tube rond ou un tube hexagonal ou un tube octogonal ou un tube avec une coupe librement définie.

9. Elément de filtre (10) selon la revendication 8 ou 9,
**caractérisé en ce que**
le côté tourné vers le fluide à filtrer (12) est plus fin que le côté opposé au fluide à filtrer (11) et **en ce que** le côté opposé au fluide à filtrer (11) formant la structure d'appui pour l'élément de filtre (10) et le côté tourné vers le fluide à filtrer (12) formant le filtre et/ou la couche filtrant.
